(19) Europäisches Patentamt European Patent Office Office européen des brevets

(11) **EP 4 682 826 A1**

(12) **EUROPEAN PATENT APPLICATION**
published in accordance with Art. 153(4) EPC

(43) Date of publication:
**21.01.2026 Bulletin 2026/04**

(21) Application number: **24770547.8**

(22) Date of filing: **29.02.2024**

(51) International Patent Classification (IPC):
**G06T 7/521** (2017.01)    **G01S 17/89** (2020.01)
**G06T 7/11** (2017.01)

(52) Cooperative Patent Classification (CPC):
**G01S 17/89; G06T 7/11; G06T 7/521**

(86) International application number:
**PCT/JP2024/007489**

(87) International publication number:
**WO 2024/190436 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.03.2023 JP 2023041670**

(71) Applicant: **Sony Group Corporation**
**Tokyo 108-0075 (JP)**

(72) Inventors:
• **SASAKI, Toshiyuki**
  **Tokyo 108-0075 (JP)**
• **OISHI, Kei**
  **Tokyo 108-0075 (JP)**

(74) Representative: **MFG Patentanwälte**
**Meyer-Wildhagen Meggle-Freund**
**Gerhard PartG mbB**
**Amalienstraße 62**
**80799 München (DE)**

(54) **INFORMATION PROCESSING DEVICE, INFORMATION PROCESSING METHOD, AND PROGRAM**

(57)    The present disclosure relates to an information processing apparatus, an information processing method, and a program that enable a high-density and high-accuracy depth dataset to be created more suitably.

An accumulation unit accumulates point clouds for multiple frames acquired by a LiDAR, a segmentation unit performs image segmentation on an intensity image based on reflection intensity from an environment acquired by the LiDAR, and an occlusion removal unit removes an occlusion point cloud corresponding to an occlusion area from the accumulated point clouds by using an execution result of the image segmentation. The technology according to the present disclosure can be applied to an in-vehicle sensor fusion system.

Fig. 1

EP 4 682 826 A1

**Description**

[Technical Field]

The present disclosure relates to an information processing apparatus, an information processing method, and a program, and particularly, to an information processing apparatus, an information processing method, and a program that enable a high-density and high-accuracy depth dataset to be created more suitably.

[Background Art]

In the development of in-vehicle sensor fusion, LiDAR is used to create a depth dataset. When LiDAR is used, a high-accuracy depth dataset can be created, but there is a problem in that the resolution (point cloud density) is low. A high-density depth dataset is required to implement high-performance sensor fusion.

In contrast, a technology has been developed that accumulates LiDAR point clouds for multiple frames to achieve higher density. For example, NPL 1 discloses a method of comparing LiDAR point clouds, which have been accumulated to increase density, with stereo depth data obtained by Semi-Global Matching (SGM) for stereo images, and removing LiDAR point clouds having large differences. According to this method, it is possible to remove point clouds in areas corresponding to occlusions or moving objects.

[Citation List]

[Non Patent Literature]

[NPL 1]

Uhrig, Jonas, et al. "Sparsity invariant CNNs." 2017 international conference on 3D Vision (3DV). IEEE, 2017.

[Summary]

[Technical Problem]

However, the method of NPL 1 requires a stereo camera, hence the entire system cannot be made compact. In addition, the stereo depth data obtained by SGM is generally low in accuracy and is inaccurate depth data, especially in areas without texture, hence there is a risk of erroneous removal of point clouds.

The present disclosure has been made in view of such circumstances, and an object thereof is to more suitably create a high-density, high-accuracy depth dataset.

[Solution to Problem]

An information processing apparatus of the present disclosure is an information processing apparatus including: an accumulation unit that accumulates point clouds for multiple frames acquired by a LiDAR; a segmentation unit that performs image segmentation on an intensity image, based on reflection intensity from an environment acquired by the LiDAR; and an occlusion removal unit that removes an occlusion point cloud corresponding to an occlusion area from the accumulated point clouds by using an execution result of the image segmentation.

An information processing method according to the present disclosure is an information processing method for causing an information processing apparatus to execute: accumulating point clouds for multiple frames acquired by a LiDAR; performing image segmentation on an intensity image, based on reflection intensity from an environment acquired by the LiDAR; and removing an occlusion point cloud corresponding to an occlusion area from the accumulated point clouds by using an execution result of the image segmentation.

A program according to the present disclosure is a program for causing a computer to execute processing of: accumulating point clouds for multiple frames acquired by a LiDAR; performing image segmentation on an intensity image, based on reflection intensity from an environment acquired by the LiDAR; and removing an occlusion point cloud corresponding to an occlusion area from the accumulated point clouds by using an execution result of the image segmentation.

In the present disclosure, point clouds for multiple frames acquired by a LiDAR are accumulated, image segmentation is performed on an intensity image based on reflection intensity from an environment acquired by the LiDAR, and an occlusion point cloud corresponding to an occlusion area is removed from the accumulated point clouds using an execution result of the image segmentation.

[Brief Description of Drawings]

[Fig. 1]

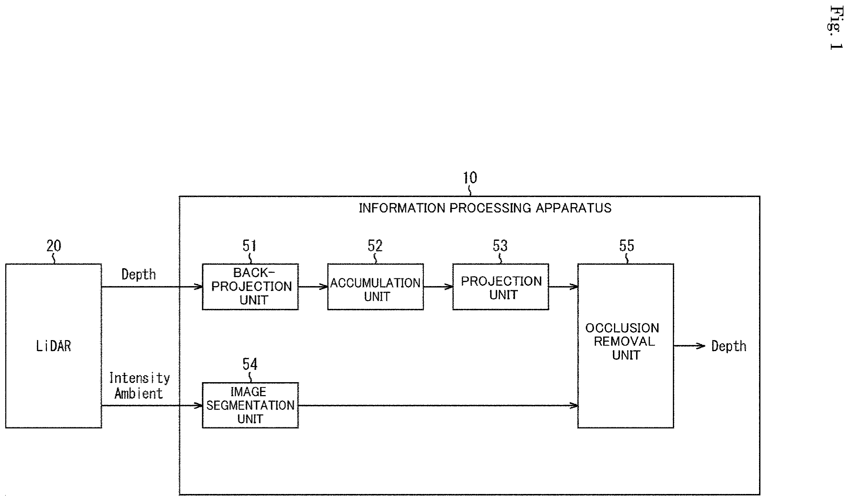

Fig. 1 is a block diagram showing an example of a functional configuration of an information processing apparatus according to the present disclosure.
[Fig. 2]

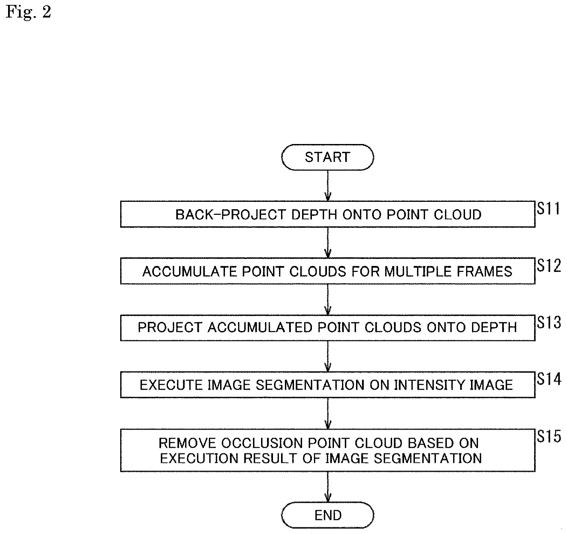

Fig. 2 is a flowchart explaining the flow of the operation of the information processing apparatus.
[Fig. 3]

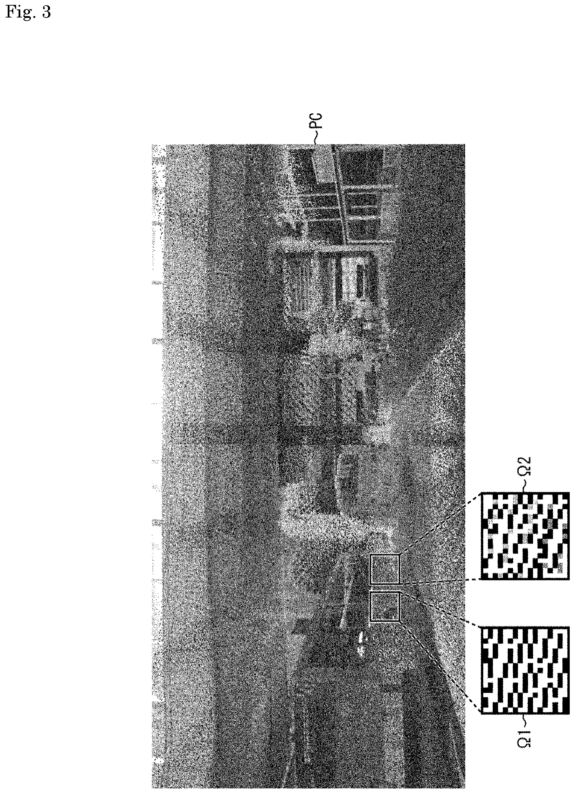

Fig. 3 is a diagram explaining an occlusion point cloud.
[Fig. 4]

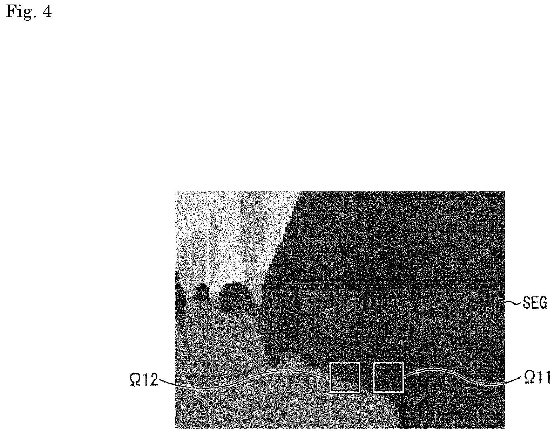

Fig. 4 is a diagram explaining the removal of a point cloud at an object boundary.
[Fig. 5]

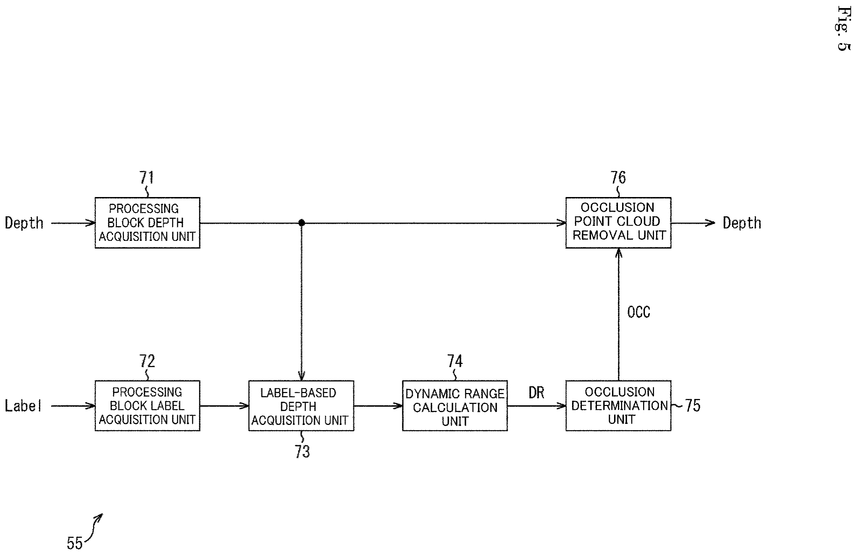

Fig. 5 is a block diagram showing a first example of the configuration of an occlusion removal unit.
[Fig. 6]

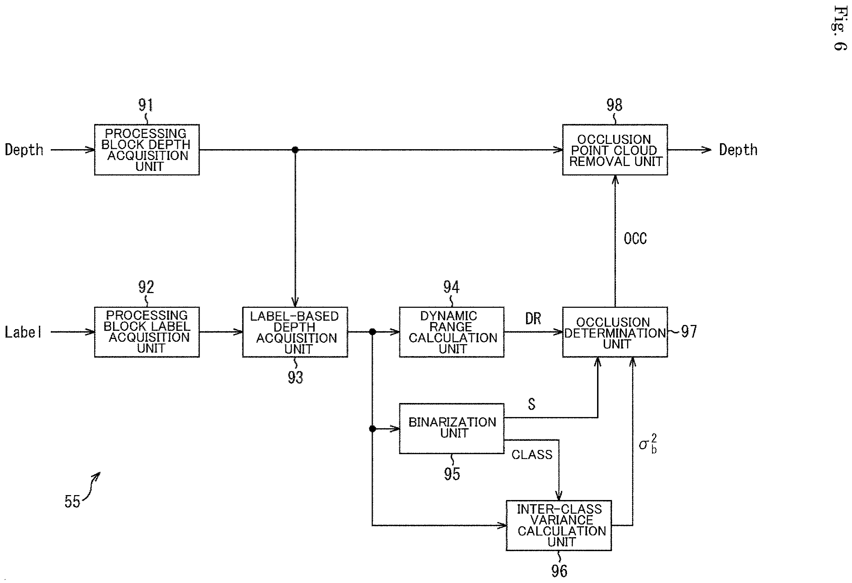

Fig. 6 is a block diagram showing a second example of the configuration of an occlusion removal unit.
[Fig. 7]

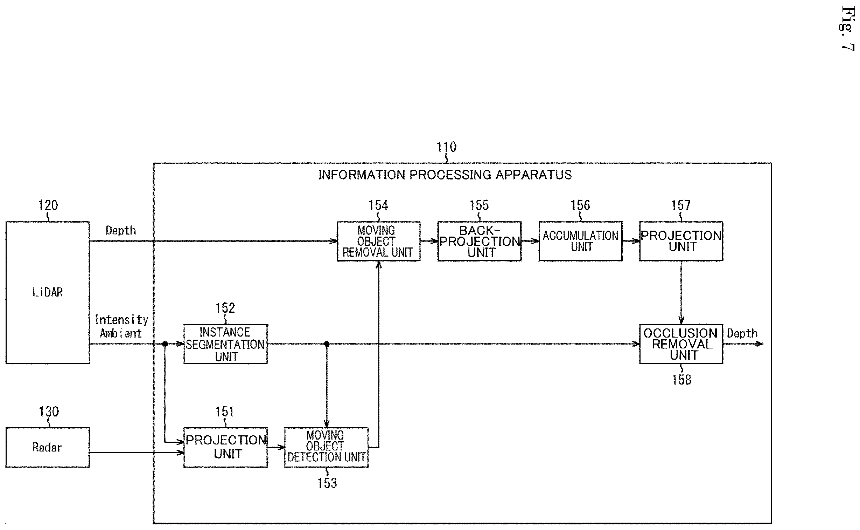

Fig. 7 is a block diagram showing an example of the functional configuration of an information processing apparatus according to a first embodiment.
[Fig. 8]

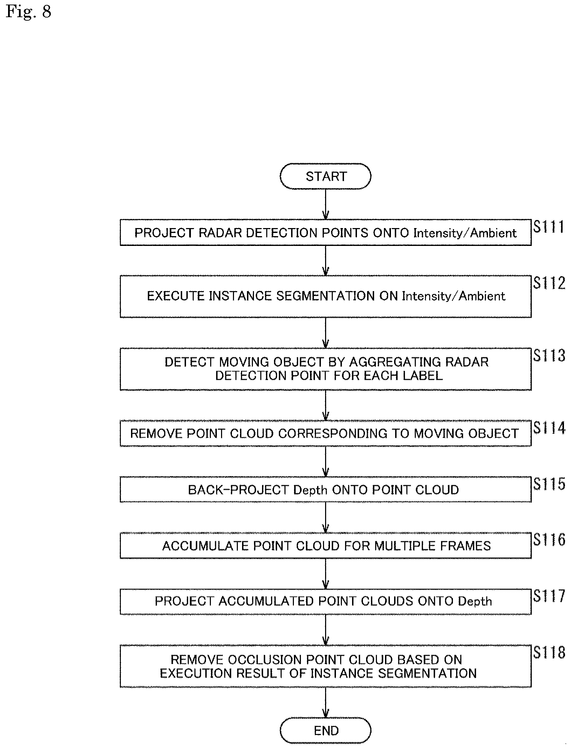

Fig. 8 is a flowchart explaining the flow of a point cloud densification process.
[Fig. 9]

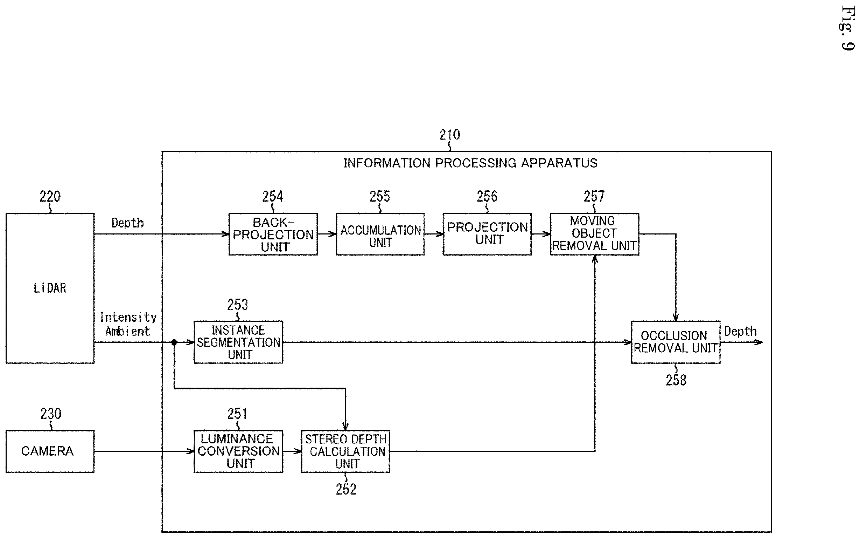

Fig. 9 is a block diagram showing an example of the functional configuration of an information processing apparatus according to a second embodiment.
[Fig. 10]

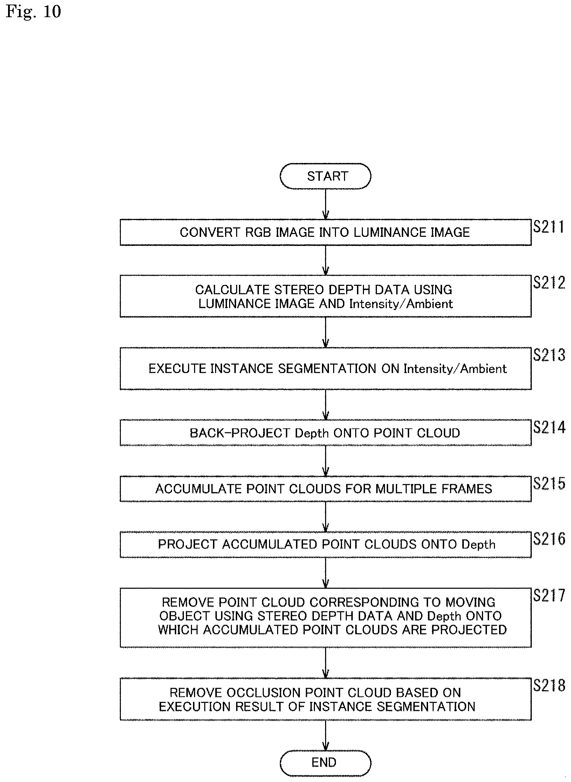

Fig. 10 is a flowchart explaining the flow of a point cloud densification process.
[Fig. 11]

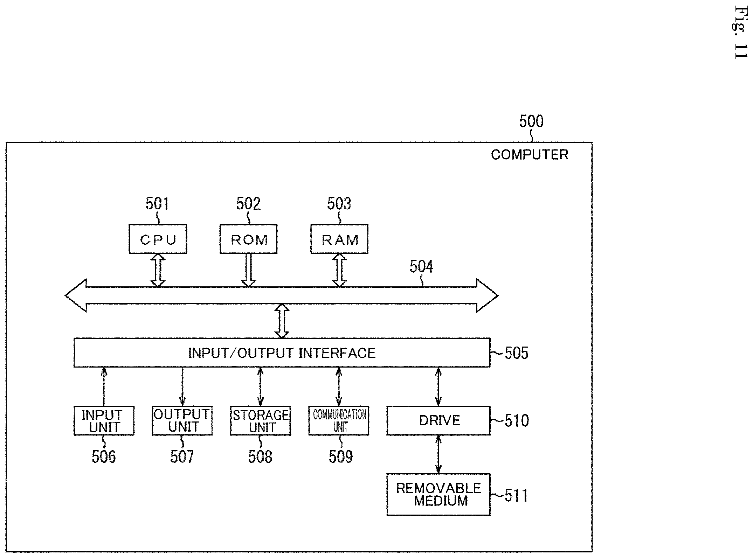

Fig. 11 is a block diagram showing an example of a hardware configuration of a computer.

[Description of Embodiments]

Hereinafter, modes for carrying out the present disclosure (hereinafter referred to as embodiments) will be described. Here, the descriptions will be given in the following order.

1. Configuration and operation of information processing apparatus according to present disclosure
2. Occlusion point cloud and its removal
3. First embodiment (system configuration using LiDAR and Radar)
4. Second embodiment (system configuration using LiDAR and RGB camera)
5. Examples of use of technology according to present disclosure
6. Example of computer hardware configuration

<1. Configuration and operation of information processing apparatus according to present disclosure>

(Configuration of information processing apparatus)

Fig. 1 is a block diagram illustrating an example of the functional configuration of an information processing apparatus according to the present disclosure.
The information processing apparatus 10 shown in Fig. 1 is a device that creates a depth dataset using a LiDAR 20.
The LiDAR 20 is configured as a dToF (Direct Time of Flight) type SPAD (Single Photon Avalanche Diode) distance sensor for in-vehicle LiDAR (Light Detection and Ranging, Laser Imaging Detection and Ranging).
The LiDAR 20 can acquire and output not only depth data (Depth) that indicates the distance to a target object, but also an intensity image based on the reflection intensity from the environment. The intensity image may include an intensity image (Intensity), in which the pixel value represents the peak value of the reflection intensity, and an ambient light image (Ambient), in which the pixel value represents the accumulated value of the reflection intensity.
The information processing apparatus 10 is configured as a computer that operates by executing a predetermined program, for example. The information processing apparatus 10 realizes a back-projection unit 51, an accumulation unit 52, a projection unit 53, an image segmentation unit 54, and an occlusion removal unit 55 as functional blocks.

The back-projection unit 51 back-projects the depth data (depth map), which is two-dimensional data acquired by the LiDAR 20, into a point cloud, which is three-dimensional data, for each frame, and supplies the point cloud to the accumulation unit 52.

The accumulation unit 52 accumulates (integrates) the point clouds for multiple frames from the back-projection unit 51, and supplies the point clouds to the projection unit 53.

Examples of a method for accumulating point clouds for multiple frames include the method disclosed in Szymon. R and Marc. L, "Efficient Variants of the ICP Algorithm", Proceedings Third International Conference on 3-D Digital Imaging and Modeling, 2001. and the method disclosed in Gojcic, Zan, et al. "The perfect match: 3d point cloud matching with smoothed densities." Proceedings of the IEEE/CVF conference on computer vision and pattern recognition. 2019.

The projection unit 53 projects the accumulated point clouds from the accumulation unit 52 onto depth data, which is two-dimensional data, and supplies the point clouds to the occlusion removal unit 55.

The image segmentation unit 54 performs image segmentation on the intensity image (Intensity/Ambient) acquired by the LiDAR 20, and supplies the execution result to the occlusion removal unit 55.

The occlusion removal unit 55 uses the execution result of image segmentation from the image segmentation unit 54 to remove an occlusion point cloud corresponding to an occlusion area where occlusion occurs from the accumulated point clouds from the projection unit 53. Details of the occlusion point cloud will be described later.

(Operation of information processing apparatus)

The flow of the operation of the information processing apparatus 10 will be described with reference to the flowchart of Fig. 2. The process of Fig. 2 is started by inputting depth data and an intensity image acquired in advance by the LiDAR 20 mounted on a vehicle, for example, to the information processing apparatus 10.

In step S11, the back-projection unit 51 back-projects the depth data acquired by the LiDAR 20 to a point cloud. Here, when the depth data $Z=f(u, v)$ is back-projected onto the camera coordinates $(X, Y, Z)$, $X$ and $Y$ can be expressed by Equation (2) using the internal camera parameters expressed by Equation (1).

[Math. 1]

$$\begin{pmatrix} f_x & 0 & c_x \\ 0 & f_y & c_y \\ 0 & 0 & 1 \end{pmatrix} \qquad \cdots (1)$$

[Math. 2]

$$X = \frac{(u-c_x)Z}{f_x}$$

$$Y = \frac{(v-c_y)Z}{f_y} \qquad \cdots (2)$$

In step S12, the accumulation unit 52 accumulates the back-projected point clouds for multiple frames. In this way, it is possible to obtain a high-density point cloud.

In step S13, the projection unit 53 projects the accumulated point cloud onto the depth data. Here, when projecting the point clouds from the camera coordinates $(X, Y, Z)$ onto the depth data $Z=f(u, v)$, each point cloud is projected onto the coordinates $(u, v)$ expressed by Equation (3).

[Math. 3]

$$u = \frac{f_x X}{Z} + c_x$$

$$v = \frac{f_y Y}{Z} + c_y$$

$$\cdots (3)$$

In step S14, the image segmentation unit 54 performs image segmentation on the intensity image acquired by the LiDAR 20 to recognize objects contained in the intensity image and assign a label and a unique ID to each object. Image segmentation may be instance segmentation or panoptic segmentation, as long as it can recognize multiple identical objects as separate objects.

In step S15, the occlusion removal unit 55 removes an occlusion point cloud corresponding to an occlusion area from the point cloud projected onto the depth data based on the execution result of image segmentation.

In this way, the occlusion point cloud can be removed from the high-density point cloud.

<2. Occlusion point cloud and its removal>

Here, the definition of an occlusion point cloud and an overview of its removal will be described.

(Definition of occlusion point cloud)

As shown in Fig. 3, when a point cloud is projected onto an image PC, a point cloud that should not be visible but corresponds to the background of an object (that is, an occlusion area) may become visible. In the present disclosure, such a point cloud that corresponds to the background of an object is defined as an occlusion point cloud.

When an occlusion point cloud is present, an inaccurate point cloud will be included in the depth data. For example, if such depth data is used for depth estimation training, the accuracy of the depth estimation may decrease. Therefore, removing occlusion point clouds is a very important technique for depth data creation and depth estimation training.

(Overview of removal of occlusion point clouds)

When an occlusion point cloud is present, the background of the object becomes visible, resulting in large local variations in depth data.

Specifically, as shown in Fig. 3, in a processing block $\Omega 1$, which is the target of processing for removing the occlusion point cloud, the depth data, which indicates closeness by the density of black, is expressed with a uniform density. On the other hand, in a processing block $\Omega 2$, the depth data, which indicates closeness by the density of black, is expressed with different density.

Here, if the dynamic range of the depth data in the processing block is larger than a certain standard, it is considered that an occlusion point cloud is present in the processing block. That is, in the example of Fig. 3, it is considered that no occlusion point cloud is present in the processing block $\Omega 1$, and an occlusion point cloud is present in the processing block $\Omega 2$.

In a processing block in which an occlusion point cloud is present, depth data is clustered, and a class with large depth data (a point cloud of an object at a distance) is removed as an occlusion point cloud.

However, when a processing block is located at a boundary of an object, it is expected that the dynamic range of the depth data will be large even if an occlusion point cloud is not present.

Therefore, as shown in Fig. 4, by referring to the execution result SEG of the image segmentation, the point cloud is removed in a processing block $\Omega 11$ that does not include the boundary of the object, and the point cloud is not removed in a processing block $\Omega 12$ that includes the boundary of the object.

In this way, the occlusion removal unit 55 uses the execution result of the image segmentation to remove the occlusion point cloud from the accumulated (densified) point cloud, and it is possible to remove the occlusion point cloud near the boundary of the object with higher accuracy than before. In other words, it is possible to more suitably create a high-density and high-accuracy depth data set.

(Configuration example of occlusion removal unit)

Fig. 5 is a block diagram showing a first example of the configuration of the occlusion removal unit 55.

The occlusion removal unit 55 shown in Fig. 5 is composed of a processing block depth acquisition unit 71, a processing block label acquisition unit 72, a label-based depth acquisition unit 73, a dynamic range calculation unit 74, an occlusion determination unit 75, and an occlusion point cloud removal unit 76.

Each process in the occlusion removal unit 55 is executed for each processing block, which is, for example, a rectangular pixel area centered on a specific pixel x.

The processing block depth acquisition unit 71 acquires depth data within the processing block from the depth data onto which the point cloud is projected by the projection unit 53, and supplies the depth data to the label-based depth acquisition unit 73 and the occlusion point cloud removal unit 76.

The processing block label acquisition unit 72 acquires labels indicating each object included in the processing block from the execution result of image segmentation (for example, instance segmentation) by the image segmentation unit 54, and supplies the labels to the label-based depth acquisition unit 73.

The label-based depth acquisition unit 73 acquires depth data from the processing block depth acquisition unit 71 on a label basis as provided by the processing block label acquisition unit 72, and supplies the depth data to the dynamic range calculation unit 74.

The dynamic range calculation unit 74 calculates the dynamic range of the depth data in the processing block based on the depth data for each label from the label-based depth acquisition unit 73.

Specifically, the dynamic range calculation unit 74 creates an instance mask IM(x) of the processing target represented by Equation (4) using the execution result I(x) of instance segmentation corresponding to the processing block centered on pixel x.

[Math. 4]

$$IM(x) = \begin{cases} 1, & I(x) \in L \\ 0, & \text{otherwise} \end{cases} \quad \cdots (4)$$

In Equation (4), L represents a processing target label. Here, the processing target label is, for example, a label indicating a specific object such as a vehicle or a pedestrian. If the processing block centered on pixel x is $\Omega(x)$, the dynamic range calculation unit 74 calculates the dynamic range DR of the depth data Depth(y) for pixel y corresponding to the processing target label in the processing block $\Omega(x)$ using Equation (5).

[Math. 5]

$$DR = \max_{y \in \Omega(x) \cdot IM(x)} Depth(y) - \min_{y \in \Omega(x) \cdot IM(x)} Depth(y) \quad \cdots (5)$$

The dynamic range DR calculated in this way is supplied to the occlusion determination unit 75.

The occlusion determination unit 75 determines whether each point cloud in the processing block is an occlusion point cloud based on the dynamic range DR from the dynamic range calculation unit 74.

Specifically, the occlusion determination unit 75 uses the dynamic range DR to calculate an occlusion point cloud existence probability $OCC_{DR}$ in the processing block. The occlusion point cloud existence probability $OCC_{DR}$ calculated from the dynamic range DR is expressed by Equation (6).

[Math. 6]

$$OCC_{DR} = \frac{\max\{DR - DR_{th}, DR_{max}\}}{DR_{max}} \quad \cdots (6)$$

The occlusion point cloud existence probability $OCC_{DR}$ (OCC) calculated in this manner is supplied to the occlusion point cloud removal unit 76.

The occlusion point cloud removal unit 76 removes the occlusion point cloud from the depth data in the processing block from the processing block depth acquisition unit 71 based on the occlusion point cloud existence probability OCC from the occlusion determination unit 75.

First, the occlusion point cloud removal unit 76 creates an instance mask IM(x) of the processing target represented by Equation (4) using the execution result I(x) of the instance segmentation corresponding to the processing block centered on pixel x.

Next, the occlusion point cloud removal unit 76 creates an occlusion point cloud removal mask OM(x) represented by Equation (7) by treating pixels larger than the average value of the depth data in the processing block $\Omega(x)$ as pixels of the occlusion point cloud.

[Math. 7]

$$OM(x) = \begin{cases} 1, & Depth(x) \leq \overline{\Omega(x) \cdot IM(x)} \\ 0, & otherwise \end{cases} \quad \cdots (7)$$

Then, the occlusion point cloud removal unit 76 uses Equation (8) to obtain depth data $Depth_{occ\_rem}(x)$ from which the occlusion point cloud has been removed.

[Math. 8]

$$Depth_{occ\_rem}(x) = \begin{cases} Depth(x) \cdot OM(x), & OCC > OCC_{th} \\ Depth(x) & otherwise \end{cases} \quad \cdots (8)$$

In the conventional technology, the occlusion point cloud was detected using low-accuracy stereo depth data, so erroneous removal of the occlusion point cloud frequently occurred. In contrast, the occlusion removal unit 55 described with reference to Fig. 5 detects occlusion point clouds using highly accurate LiDAR depth data. Thus, it is possible to remove occlusion point clouds with higher accuracy than conventional techniques.

Fig. 6 is a block diagram showing a second example of the configuration of the occlusion removal unit 55.

The occlusion removal unit 55 shown in Fig. 6 is composed of a processing block depth acquisition unit 91, a processing block label acquisition unit 92, a label-based depth acquisition unit 93, a dynamic range calculation unit 94, a binarization unit 95, an inter-class variance calculation unit 96, an occlusion determination unit 97, and an occlusion point cloud removal unit 98.

Note that the processing block depth acquisition unit 91, processing block label acquisition unit 92, label-based depth acquisition unit 93, dynamic range calculation unit 94, and occlusion point cloud removal unit 98 shown in Fig. 6 have similar functions to the processing block depth acquisition unit 71, processing block label acquisition unit 72, label-based depth acquisition unit 73, dynamic range calculation unit 74, and occlusion point cloud removal unit 76 described with reference to Fig. 5, respectively, and therefore their description will be omitted.

The depth data for each label acquired by the label-based depth acquisition unit 93 is supplied to the dynamic range calculation unit 94, binarization unit 95, and inter-class variance calculation unit 96.

The binarization unit 95 binarizes the depth data for each label by using, for example, Otsu's binarization method (discriminant separation method) (see N. Otsu, "A Threshold Selection Method from Gray-Level Histograms," in IEEE Transactions on Systems, Man, and Cybernetics, vol. 9, No. 1, pp. 62-66, Jan. 1979, doi: 10.1109/TSMC.1979.4310076.), and calculates the class separation degree S of the depth data.

If the class separation degree S is large, it can be said that there is a high probability that it is an occlusion point cloud. The dynamic range of the depth data alone cannot distinguish between the boundary part of the object and the gradation (a subject that is inclined in the depth direction), but the accuracy of the determination can be improved by using the class separation degree S.

The calculated class separation degree S of the depth data is supplied to the occlusion determination unit 97. The binarized depth data of each class is supplied to the inter-class variance calculation unit 96.

The inter-class variance calculation unit 96 calculates the inter-class variance $\sigma_b^2$ of the phase (image coordinates) of the binarized depth data of each class from the binarization unit 95. The inter-class variance $\sigma_b^2$ of the binarized depth data is calculated using Equation (9). In Equation (9), the number of pixels in class 1 is $n_1$, the number of pixels in class 2 is $n_2$, the average value of the phase of class 1 is $\mu_1$, the average value of the phase of class 2 is $\mu_2$, and the average value of all phases is $\mu_0$.

[Math. 9]

$$\sigma_b^2 = \frac{n_1 (\mu_1 - \mu_0)^2 + n_2 (\mu_2 - \mu_0)^2}{n_1 + n_2} \qquad \cdots (9)$$

If the inter-class variance $\sigma_b^2$ is large, it is highly likely that the point cloud data is a boundary part of an object, and is unlikely to be an occlusion point cloud. If the inter-class variance $\sigma_b^2$ is small, it is highly likely that the point cloud data is part of the same object, and is likely to be an occlusion point cloud.

The calculated inter-class variance $\sigma_b^2$ of the depth data is supplied to the occlusion determination unit 97.

The occlusion determination unit 97 determines whether each point cloud in the processing block is an occlusion point cloud or not based on the dynamic range DR from the dynamic range calculation unit 94, the class separation degree S from the binarization unit 95, and the inter-class variance $\sigma_b^2$ from the inter-class variance calculation unit 96.

Specifically, the occlusion determination unit 97 uses the dynamic range DR to calculate the occlusion point cloud existence probability $OCC_{DR}$ in the processing block, which is expressed by Equation (6).

Furthermore, the occlusion determination unit 97 uses the class separation degree S to calculate the occlusion point cloud existence probability OCCs in the processing block. The occlusion point cloud existence probability OCCs calculated from the class separation degree S is expressed by Equation (10).

[Math. 10]

$$OCC_S = \frac{\max\{S - S_{th}, S_{max}\}}{S_{max}} \qquad \cdots (10)$$

Furthermore, the occlusion determination unit 97 uses the inter-class variance $\sigma_b^2$ to calculate the occlusion point cloud existence probability $OCC_\varphi$ in the processing block. The occlusion point cloud existence probability $OCC_\varphi$ calculated from the inter-class variance $\sigma_b^2$ is expressed by Equation (11).

[Math. 11]

$$OCC_\phi = \frac{\max\{\sigma_b^2 - \sigma_{th}, \sigma_{max}\}}{\sigma_{max}} \qquad \cdots (11)$$

Then, the occlusion determination unit 97 performs weighted addition on the calculated occlusion point cloud existence probabilities $OCC_{DR}$, OCCs, and $OCC_\varphi$ to calculate a final occlusion point cloud existence probability OCC, which is expressed by Equation (12). Here, in Equation (12), $\alpha + \beta + \gamma = 1$.

[Math. 12]

$$OCC = \alpha \cdot OCC_{DR} + \beta \cdot OCC_S + \gamma \cdot OCC_\phi \qquad \cdots (12)$$

The occlusion point cloud existence probability OCC calculated in this way is supplied to the occlusion point cloud removal unit 98.

In the occlusion point cloud removal unit 98, the depth data $Depth_{occ\_rem}(x)$ from which the occlusion point cloud has been removed is obtained using Equations (4), (7), and (8), in the same manner as the occlusion point cloud removal unit 76 described with reference to Fig. 5.

According to the occlusion removal unit 55 described with reference to Fig. 6, in addition to the same effect as that of the occlusion removal unit 55 described with reference to Fig. 5, it is possible to improve the detection accuracy of the occlusion point cloud in a subject whose depth data has a gradation (a subject that is inclined in the depth direction). Furthermore, by integrating the occlusion point cloud existence probability calculated from multiple feature amounts (dynamic range, class separation degree, inter-class variance) of the depth data, it is possible to improve the robustness of the detection of the occlusion point cloud.

The following describes an embodiment of the present disclosure.

<3. First embodiment (system configuration using LiDAR and Radar)>

Fig. 7 is a block diagram showing an example of the functional configuration of an information processing apparatus according to the first embodiment of the present disclosure.

The information processing apparatus 110 shown in Fig. 7 is a device that detects and removes a point cloud of a moving object in addition to an occlusion point cloud by using the Radar 130 in addition to the LiDAR 120.

The LiDAR 120 is configured as a dToF SPAD distance sensor for in-vehicle LiDAR. On the other hand, the Radar 130 can detect the distance to a target object and the speed of the target object by emitting radio waves toward the target object and measuring the reflected waves.

The information processing apparatus 110 is configured with a projection unit 151, an instance segmentation unit 152, a moving object detection unit 153, a moving object removal unit 154, a back-projection unit 155, an accumulation unit 156, a projection unit 157, and an occlusion removal unit 158.

The projection unit 151 projects the radar detection points acquired by the Radar 130 onto an intensity image (Intensity/Ambient) acquired by the LiDAR 120, and supplies the radar detection points to the moving object detection unit 153.

The instance segmentation unit 152 performs instance segmentation on the intensity image (Intensity/Ambient) acquired by the LiDAR 120, and supplies the execution result to the moving object detection unit 153 and the occlusion removal unit 158.

Examples of instance segmentation that can be used include the method disclosed in He, Kaiming, et al. "Mask r-cnn." Proceedings of the IEEE international conference on computer vision. 2017. and the method disclosed in Wang, Xinlong, et al. "Solo: Segmenting objects by locations." Computer Vision-ECCV 2020: 16th European Conference, Glasgow, UK, August 23-28, 2020, Proceedings, Part XVIII 16. Springer International Publishing, 2020.

The moving object detection unit 153 detects moving objects by aggregating the radar detection points projected onto the intensity image by the projection unit 151 based on the execution result of instance segmentation from the instance segmentation unit 152.

The moving object removal unit 154 removes the point cloud corresponding to the moving object detected by the moving object detection unit 153 from the depth data acquired by the LiDAR 120. The depth data from which the point cloud corresponding to the moving object has been removed is supplied to the back-projection unit 155.

The back-projection unit 155 back-projects the depth data from the moving object removal unit 154 onto a point cloud (three-dimensional space) for each frame and supplies the depth data to the accumulation unit 156.

The accumulation unit 156 accumulates the point clouds for multiple frames from the back-projection unit 155 and supplies the point clouds to the projection unit 157.

The projection unit 157 projects the accumulated point clouds from the accumulation unit 156 onto the depth data and supplies the point clouds to the occlusion removal unit 158.

The occlusion removal unit 158 removes the occlusion point cloud from the accumulated point clouds from the projection unit 157 using the execution result of instance segmentation from the instance segmentation unit 152. The occlusion removal unit 158 may have a configuration similar to that of the occlusion removal unit 55 described with reference to Fig. 5 and Fig. 6.

The flow of the point cloud densification process by the information processing apparatus 110 will be described with reference to the flowchart in Fig. 8. The process in Fig. 8 is started by inputting, for example, depth data and an intensity image (Intensity/Ambient) acquired in advance by the LiDAR 120 mounted on the vehicle, and radar detection points acquired in advance by the Radar 130, to the information processing apparatus 110.

In step S111, the projection unit 151 projects the radar detection points acquired by the Radar 130 onto the Intensity/Ambient acquired by the LiDAR 120.

In step S112, the instance segmentation unit 152 recognizes objects included in the Intensity/Ambient by performing instance segmentation on the Intensity/Ambient acquired by the LiDAR 120, and assigns a label and a unique ID to each object.

In step S113, the moving object detection unit 153 detects moving objects by aggregating the radar detection points projected onto the Intensity/Ambient for each label (recognized object) assigned by the instance segmentation unit 152. Here, the moving object is detected by determining whether the object is moving based on the speed information for each object recognized by instance segmentation.

Specifically, the moving object detection unit 153 creates an instance mask IM(x) of the processing target represented by Equation (4) using the execution result I(x) of the instance segmentation corresponding to the processing block centered on pixel x.

If the speed information of the radar detection point is v(x), the speed information $v_I(x)$ for each object is represented by Equation (13).

[Math. 13]

$$v_I(x) = \sum v(x) \cdot IM(x) \qquad \cdots (13)$$

In step S114, the moving object removal unit 154 removes the point cloud corresponding to the moving object detected by the moving object detection unit 153 from the depth data acquired by the LiDAR 120.

Specifically, the moving object removal unit 154 creates a moving object mask MM(x) expressed by Equation (14) using the speed information $v_I(x)$ for each object expressed by Equation (13).

[Math. 14]

$$MM(x) = \begin{cases} 1, & v_I(x) \le v_{th} \\ 0, & \text{otherwise} \end{cases} \qquad \cdots (14)$$

Then, the moving object removal unit 154 uses Equation (15) to obtain depth data $Depth_{mo\_rem}(x)$ from which the moving object has been removed.

[Math. 15]

$$Depth_{mo\_rem}(x) = Depth(x) \cdot MM(x) \qquad \cdots (15)$$

In step S115, the back-projection unit 155 back-projects the depth data from which the point cloud corresponding to the moving object has been removed, to a point cloud for each frame.

In step S116, the accumulation unit 156 accumulates the point clouds for multiple frames back-projected by the back-projection unit 155. In this way, it is possible to obtain a high-density point cloud.

In step S117, the projection unit 157 projects the accumulated point cloud onto depth data.

In step S118, the occlusion removal unit 158 removes the occlusion point cloud from the point clouds accumulated by the projection unit 157 based on the execution result of instance segmentation by the instance segmentation unit 152.

In the conventional technology, in addition to the LiDAR, two cameras were required to obtain stereo depth data.

In addition, in the conventional technology, moving objects were detected by comparing the LiDAR depth data with the stereo depth data, but the stereo depth data generally has low accuracy, and is inaccurate depth data, especially in areas without texture. As a result, erroneous detection of moving objects frequently occurred.

On the other hand, according to the present embodiment, it is only necessary to provide one radar in addition to the LiDAR, so the entire system can be made compact. In addition, according to the present embodiment, the speed of an object is directly observed using a radar, and further, the radar detection points are aggregated using instance segmentation to remove radar noise. Thus, it is possible to detect moving objects with higher accuracy.

<4. Second embodiment (system configuration using LiDAR and RGB camera)>

Fig. 9 is a block diagram showing an example of a functional configuration of an information processing apparatus according to the second embodiment of the present disclosure.

The information processing apparatus 210 shown in Fig. 9 is a device that detects and removes a point cloud of a moving object in addition to an occlusion point cloud by using a camera 230 in addition to a LiDAR 220.

The LiDAR 220 is configured as a dToF SPAD distance sensor for an in-vehicle LiDAR. On the other hand, the camera 230 can acquire an RGB image by photographing the environment.

The information processing apparatus 210 is configured with a luminance conversion unit 251, a stereo depth calculation unit 252, an instance segmentation unit 253, a back-projection unit 254, an accumulation unit 255, a projection unit 256, a moving object removal unit 257, and an occlusion removal unit 258.

The luminance conversion unit 251 converts the RGB image acquired by the camera 230 into a luminance image and supplies the luminance image to the stereo depth calculation unit 252.

The stereo depth calculation unit 252 calculates stereo depth data using the luminance image from the luminance conversion unit 251 and an intensity image (Intensity/Ambient) acquired by the LiDAR 220, and supplies the stereo depth data to the moving object removal unit 257.

Examples of a method for calculating stereo depth data include the method disclosed in Mayer, Nikolaus, et al. "A large dataset to train convolutional networks for disparity, optical flow, and scene flow estimation." Proceedings of the IEEE conference on computer vision and pattern recognition. 2016., the method disclosed in Tankovich, Vladimir, et al. "Hitnet: Hierarchical iterative tile refinement network for real-time stereo matching." Proceedings of the IEEE/CVF Conference on Computer Vision and Pattern Recognition. 2021., and the method disclosed in Xu, Gangwei, et al. "Attention concatenation volume for accurate and efficient stereo matching." Proceedings of the IEEE/CVF Conference on Computer Vision and Pattern Recognition. 2022.

The instance segmentation unit 253 performs instance segmentation on the intensity image acquired by the LiDAR 220, and supplies the execution result to the occlusion removal unit 258.

The back-projection unit 254 back-projects the depth data acquired by the LiDAR 220 onto a point cloud (three-dimensional space) for each frame, and supplies the depth data to the accumulation unit 255.

The accumulation unit 255 accumulates the point clouds for multiple frames from the back-projection unit 254, and supplies the point clouds to the projection unit 256.

The projection unit 256 projects the accumulated point clouds from the accumulation unit 255 onto the depth data, and supplies the point clouds to the moving object removal unit 257.

The moving object removal unit 257 removes the point cloud corresponding to the moving object by comparing the stereo depth data from the stereo depth calculation unit 252 with the depth data corresponding to the accumulated point cloud. The depth data from which the point cloud corresponding to the moving object has been removed is supplied to the occlusion removal unit 258.

The occlusion removal unit 258 uses the execution result of the instance segmentation from the instance segmentation unit 253 to remove the occlusion point cloud from the depth data from which the point cloud corresponding to the moving object from the moving object removal unit 257 has been removed. The occlusion removal unit 258 may have a configuration similar to that of the occlusion removal unit 55 described with reference to Fig. 5 and Fig. 6.

The flow of the point cloud densification process performed by the information processing apparatus 210 will be described with reference to the flowchart in Fig. 10. The process in Fig. 10 is started by inputting, for example, depth data and an intensity image (Intensity/Ambient) acquired in advance by the LiDAR 220 mounted on the vehicle, and an RGB image acquired in advance by the camera 230, into the information processing apparatus 210.

In step S211, the luminance conversion unit 251 converts the RGB image acquired by the camera 230 into a luminance image.

Here, the RGB image may be converted into a color space expressed using a luminance signal and two color difference signals, such as YUV expressed by Equation (16) or YCbCr expressed by Equation (17).

[Math. 16]

$$\begin{pmatrix} Y \\ U \\ V \end{pmatrix} = \begin{pmatrix} 0.299 & 0.587 & 0.114 \\ -0.14713 & -0.28886 & 0.436 \\ 0.615 & -0.51499 & -0.10001 \end{pmatrix} = \begin{pmatrix} R \\ G \\ B \end{pmatrix} \quad \cdots (16)$$

[Math. 17]

$$\begin{pmatrix} Y \\ C_b \\ C_r \end{pmatrix} = \begin{pmatrix} 0.299 & 0.587 & 0.114 \\ -0.168736 & -0.331264 & 0.5 \\ 0.5 & -0.418688 & -0.081312 \end{pmatrix} = \begin{pmatrix} R \\ G \\ B \end{pmatrix} \quad \cdots (17)$$

Also, the RGB image may be converted to an IR image, for example, as disclosed in A. Shukla, A. Upadhyay, M. Sharma, V. Chinnusamy and S. Kumar, "High-Resolution NIR Prediction from RGB Images: Application to Plant Phenotyping," 2022 IEEE International Conference on Image Processing (ICIP), Bordeaux, France, 2022, pp. 4058-4062, doi: 10.1109/ICIP46576.2022.9897670.

In step S212, the stereo depth calculation unit 252 calculates stereo depth data using the luminance image converted by the luminance conversion unit 251 and the intensity image (Intensity/Ambient) acquired by the LiDAR 120.

In step S213, the instance segmentation unit 253 performs instance segmentation on the Intensity/Ambient acquired by the LiDAR 220 to recognize objects contained in the Intensity/Ambient and assigns a label and a unique ID to each object.

In step S214, the back-projection unit 254 back-projects the depth data acquired by the LiDAR 120 into a point cloud for each frame.

In step S215, the accumulation unit 255 accumulates the point clouds for multiple frames back-projected by the back-projection unit 254. As a result, a high-density point cloud can be obtained.

In step S216, the projection unit 256 projects the accumulated point cloud onto the depth data.

In step S217, the moving object removal unit 257 removes the point cloud corresponding to the moving object using the stereo depth data calculated by the stereo depth calculation unit 252 and the depth data onto which the accumulated point cloud is projected.

Specifically, the moving object removal unit 257 creates a moving object mask MM(x) expressed by Equation (18) using the depth data Depth(x) and stereo depth data $Depth_{stereo}$(x) acquired by the LiDAR 220.

[Math. 18]

$$MM(x) = \begin{cases} 1, & |Depth(x) - Depth_{stereo}(x)| \leq diff_{th} \\ 0, & otherwise \end{cases} \quad \cdots (18)$$

Then, the moving object removal unit 257 obtains depth data $Depth_{mo\_rem}$(x) from which the moving object has been removed using Equation (19).

[Math. 19]

$$Depth_{mo\_rem}(x) = Depth(x) \cdot MM(x) \qquad \cdot \cdot \cdot (19)$$

In step S218, the occlusion removal unit 258 removes the occlusion point cloud from the depth data from which the moving object has been removed, based on the execution result of the instance segmentation by the instance segmentation unit 253.

In the conventional technology, two cameras were required to acquire stereo depth data in addition to the LiDAR. In the conventional technology, moving objects were detected by comparing the LiDAR depth data with the stereo depth data, but the stereo depth data generally has low accuracy, and the depth data is inaccurate especially in areas without texture. As a result, erroneous detection of moving objects frequently occurred.

On the other hand, according to the present embodiment, it is only necessary to provide one camera in addition to the LiDAR, so the entire system can be made compact. In addition, according to the present embodiment, stereo depth data based on the LiDAR can be obtained by calculating stereo depth data using the Intensity or Ambient of the LiDAR, so that the LiDAR depth data can be compared with the stereo depth data with higher accuracy than before, and moving objects can be detected with higher accuracy.

<5. Examples of use of technology according to present disclosure>

The above-mentioned examples of use of the technology according to the present disclosure and their effects will be described.

(Creation of depth dataset)

According to the technology according to the present disclosure, it is possible to create a depth dataset with higher density and accuracy than the conventional technology.

By using the depth dataset created by the technology according to the present disclosure, it is possible to evaluate the depth with higher accuracy than the conventional technology. In addition, by training Monocular Depth Estimation or Depth Completion using the depth dataset created by the technology according to the present disclosure, it is possible to improve the accuracy of depth estimation compared to the case of using a conventional depth dataset. In particular, in areas without texture, which was a problem in the conventional technology, training with high-density Ground Truth (GT) is possible, so the accuracy of depth estimation in areas without texture can be improved.

(ADAS)

If the processing cost is acceptable, the technology according to the present disclosure can be applied to Advanced Driver-Assistance Systems (ADAS).

In other words, by performing three-dimensional object detection using high-density and high-accuracy depth data created by the technology according to the present disclosure, it is possible to realize an automatic emergency braking system (AEBS) and an automatic valet parking system (AVP) with higher accuracy than before.

(3D modeling)

Using the technology according to the present disclosure, it is possible to perform 3D modeling by measuring the depth around the subject.

Conventionally, 3D modeling could not be performed if a moving object was included, but in the technology according to the present disclosure, the LiDAR point cloud is accumulated while removing the moving object, so that 3D modeling can be performed with high accuracy even if a moving object is included.

<6. Example of computer hardware configuration>

The series of processing described above can be executed by hardware or by software. When executing the series of processing steps by software, a program that makes up the software is installed from a program recording medium onto either a computer incorporated in dedicated hardware or a general-purpose personal computer.

Fig. 11 is a block diagram showing an example of the hardware configuration of a computer that executes the above-mentioned series of processes by a program.

The information processing apparatus 10, 110, 210 to which the technology according to the present disclosure can be applied is realized by an information processing apparatus 500 having the configuration shown in Fig. 11.

A Central Processing Unit (CPU) 501, a Read Only Memory (ROM) 502, and a Random Access Memory (RAM) 503 are connected to one another via a bus 504.

An input/output interface 505 is further connected to the bus 504. To the input/output interface 505, an input unit 506 including a keyboard, a mouse, a LiDAR, a Radar, a camera, and the like, and an output unit 507 including a display, a speaker, and the like are connected. The timing of imaging of the LiDAR, Radar, and camera constituting the input unit 506 is synchronized. In addition, to the input/output interface 505, a storage unit 508 including a hard disk, a Solid State Drive (SSD), a non-volatile memory, and the like, a communication unit 509 including a network interface, and the like, and a drive 510 for driving a removable medium 511 are connected.

In the computer configured as above, the CPU 501 loads, for example, a program stored in the storage unit 508 into the RAM 503 via the input/output interface 505 and the bus 504 and executes the program, thereby performing the above-mentioned series of processes.

The program executed by the CPU 501 is recorded on, for example, the removable medium 511 or is provided via wired or wireless transfer media such as a local area network, the Internet, or digital broadcasting and is installed in the storage unit 508.

Note that the program executed by the computer may be a program that performs processing chronologically in the order described in the present specification or may be a program that performs processing in parallel or at a necessary timing such as a called time.

The embodiments of the present disclosure are not limited to the above-mentioned embodiments, and various modifications are possible within the scope of the gist of the present disclosure.

For example, the embodiments of the present disclosure may have a cloud computing configuration in which one function is shared and processed jointly by multiple devices via a network.

In addition, each step described in the flowchart discussed above can be executed by a single device, or executed by a plurality of devices in a distributed manner.

Furthermore, when a single step includes a plurality of types of processing, the plurality of types of processing included in the single step can be performed by a single device, or in a distributed manner by a plurality of devices.

Moreover, the advantageous effects described in the present specification are merely exemplary and are not restrictive, and other advantageous effects may be produced.

Further, the present disclosure can be configured as follows.

(1)

An information processing apparatus including:

an accumulation unit that accumulates point clouds for multiple frames acquired by a LiDAR; a segmentation unit that performs image segmentation on an intensity image, based on reflection intensity from an environment acquired by the LiDAR; and an occlusion removal unit that removes an occlusion point cloud corresponding to an occlusion area from the accumulated point clouds by using an execution result of the image segmentation.

(2)

The information processing apparatus according to (1), further including: a projection unit that projects radar detection points, acquired by a radar, onto the intensity image;

a moving object detection unit that detects a moving object by aggregating the radar detection points, based on the execution result of the image segmentation; and a moving object removal unit that removes the point cloud corresponding to the moving object.

(3)

The information processing apparatus according to (2), wherein

the moving object detection unit detects the moving object by aggregating the radar detection points for each object recognized by the image segmentation, and the moving object removal unit removes the point cloud corresponding to the moving object from the point clouds before accumulation.

(4)

The information processing apparatus according to (1), further including:

a luminance conversion unit that converts an RGB image, acquired by a camera, into a luminance image; and a moving object removal unit that removes the point cloud corresponding to the moving object by comparing stereo depth data, calculated using the luminance image and the intensity image, with depth data corresponding to the accumulated point clouds.

(5)

The information processing apparatus according to (4), wherein

the moving object removal unit removes the point cloud corresponding to the moving object from the accumulated point clouds.

(6)

The information processing apparatus according to any one of (1) to (5), wherein

the occlusion removal unit uses the execution result of the image segmentation to calculate a dynamic range of depth data corresponding to the accumulated point cloud for each processing block, thereby determining whether the point cloud is the occlusion point cloud.

(7)

The information processing apparatus according to (6), wherein

the occlusion removal unit calculates the dynamic range of the depth data for a specific object among objects recognized by the image segmentation.

(8)

The information processing apparatus according to (7), wherein

the occlusion removal unit removes the occlusion point cloud, based on an existence probability of the occlusion point cloud calculated using the dynamic range.

(9)

The information processing apparatus according to any one of (6) to (8), wherein the occlusion removal unit binarizes the depth data and further calculates a class separation degree and an inter-class variance of the depth data, thereby determining whether the point cloud is the occlusion point cloud.

(10)

The information processing apparatus according to (9), wherein

the occlusion removal unit calculates a final existence probability by weighting and adding the existence probabilities of the occlusion point clouds calculated using the dynamic range, the class separation degree, and the inter-class variance.

(11)

The information processing apparatus according to (10), wherein

the occlusion removal unit removes the occlusion point cloud, based on the final existence probability.

(12)

The information processing apparatus according to any one of (1) to (11), wherein the image segmentation is instance segmentation.

(13)

The information processing apparatus according to any one of (1) to (11), wherein the image segmentation is panoptic segmentation.

(14)

The information processing apparatus according to any one of (1) to (13), wherein

the intensity image is an image in which a pixel value is a peak value of the reflection intensity.

(15)

The information processing apparatus according to any one of (1) to (13), wherein

the intensity image is an image in which a pixel value represents an accumulated value of the reflection intensity.

(16)

An information processing method for causing an information processing apparatus to execute:

accumulating point clouds for multiple frames acquired by a LiDAR;
performing image segmentation on an intensity image, based on reflection intensity from an environment acquired by the LiDAR; and
removing an occlusion point cloud corresponding to an occlusion area from the accumulated point clouds by using an execution result of the image segmentation.

(17) A program for causing a computer to execute processing of:

accumulating point clouds for multiple frames acquired by a LiDAR;
performing image segmentation on an intensity image, based on reflection intensity from an environment acquired by the LiDAR; and
removing an occlusion point cloud corresponding to an occlusion area from the accumulated point clouds by using an execution result of the image segmentation.

[Reference Signs List]

| | |
|---|---|
| 10 | Information processing apparatus |
| 20 | LiDAR |
| 51 | Back-projection unit |
| 52 | Accumulation unit |
| 53 | Projection unit |
| 54 | Image segmentation unit |
| 55 | Occlusion removal unit |
| 110 | Information processing apparatus |
| 120 | LiDAR |
| 130 | Radar |
| 151 | Projection unit |
| 152 | Instance segmentation unit |
| 153 | Moving object detection unit |
| 154 | Moving object removal unit |
| 155 | Back-projection unit |
| 156 | Accumulation unit |
| 157 | Projection unit |
| 158 | Occlusion removal unit |
| 210 | Information processing apparatus |
| 220 | LiDAR |
| 230 | Camera |
| 251 | Luminance conversion unit |
| 252 | Stereo depth calculation unit |
| 253 | Instance segmentation unit |
| 254 | Back-projection unit |
| 255 | Accumulation unit |
| 256 | Projection unit |
| 257 | Moving object removal unit |
| 258 | Occlusion removal unit |

**Claims**

1. An information processing apparatus comprising:

an accumulation unit that accumulates point clouds for multiple frames acquired by a LiDAR;
a segmentation unit that performs image segmentation on an intensity image, based on reflection intensity from an environment acquired by the LiDAR; and
an occlusion removal unit that removes an occlusion point cloud corresponding to an occlusion area from the accumulated point clouds by using an execution result of the image segmentation.

2. The information processing apparatus according to claim 1, further comprising:

a projection unit that projects radar detection points, acquired by a radar, onto the intensity image;
a moving object detection unit that detects a moving object by aggregating the radar detection points, based on the execution result of the image segmentation; and
a moving object removal unit that removes the point cloud corresponding to the moving object.

3. The information processing apparatus according to claim 2, wherein

the moving object detection unit detects the moving object by aggregating the radar detection points for each object recognized by the image segmentation, and
the moving object removal unit removes the point cloud corresponding to the moving object from the point clouds before accumulation.

4. The information processing apparatus according to claim 1, further comprising:

   a luminance conversion unit that converts an RGB image, acquired by a camera, into a luminance image; and
   a moving object removal unit that removes the point cloud corresponding to the moving object by comparing
   stereo depth data, calculated using the luminance image and the intensity image, with depth data corresponding
   to the accumulated point clouds.

5. The information processing apparatus according to claim 4, wherein
   the moving object removal unit removes the point cloud corresponding to the moving object from the accumulated
   point clouds.

6. The information processing apparatus according to claim 1, wherein
   the occlusion removal unit uses the execution result of the image segmentation to calculate a dynamic range of depth
   data corresponding to the accumulated point cloud for each processing block, thereby determining whether the point
   cloud is the occlusion point cloud.

7. The information processing apparatus according to claim 6, wherein
   the occlusion removal unit calculates the dynamic range of the depth data for a specific object among objects
   recognized by the image segmentation.

8. The information processing apparatus according to claim 7, wherein
   the occlusion removal unit removes the occlusion point cloud, based on an existence probability of the occlusion point
   cloud calculated using the dynamic range.

9. The information processing apparatus according to claim 6, wherein
   the occlusion removal unit binarizes the depth data and further calculates a class separation degree and an inter-class
   variance of the depth data, thereby determining whether the point cloud is the occlusion point cloud.

10. The information processing apparatus according to claim 9, wherein

    the occlusion removal unit calculates a final existence probability by weighting and adding the existence
    probabilities of the occlusion point clouds calculated using the dynamic range,
    the class separation degree, and the inter-class variance.

11. The information processing apparatus according to claim 10, wherein
    the occlusion removal unit removes the occlusion point cloud, based on the final existence probability.

12. The information processing apparatus according to claim 1, wherein
    the image segmentation is instance segmentation.

13. The information processing apparatus according to claim 1, wherein
    the image segmentation is panoptic segmentation.

14. The information processing apparatus according to claim 1, wherein
    the intensity image is an image in which a pixel value is a peak value of the reflection intensity.

15. The information processing apparatus according to claim 1, wherein
    the intensity image is an image in which a pixel value represents an accumulated value of the reflection intensity.

16. An information processing method for causing an information processing apparatus to execute:

    accumulating point clouds for multiple frames acquired by a LiDAR;
    performing image segmentation on an intensity image, based on reflection intensity from an environment
    acquired by the LiDAR; and
    removing an occlusion point cloud corresponding to an occlusion area from the accumulated point clouds by
    using an execution result of the image segmentation.

17. A program for causing a computer to execute processing of:

accumulating point clouds for multiple frames acquired by a LiDAR;

performing image segmentation on an intensity image, based on reflection intensity from an environment acquired by the LiDAR; and

removing an occlusion point cloud corresponding to an occlusion area from the accumulated point clouds by using an execution result of the image segmentation.

Fig. 1

EP 4 682 826 A1

10

INFORMATION PROCESSING APPARATUS

20

LiDAR

Depth

51
BACK-
PROJECTION
UNIT

52
ACCUMULATION
UNIT

53
PROJECTION
UNIT

55
OCCLUSION
REMOVAL
UNIT

Depth

Intensity
Ambient

54
IMAGE
SEGMENTATION
UNIT

Fig. 2

```
                    ( START )
                        |
                        v
  +-----------------------------------------------+ S11
  |   BACK-PROJECT DEPTH ONTO POINT CLOUD         |
  +-----------------------------------------------+
                        |
                        v
  +-----------------------------------------------+ S12
  |   ACCUMULATE POINT CLOUDS FOR MULTIPLE FRAMES |
  +-----------------------------------------------+
                        |
                        v
  +-----------------------------------------------+ S13
  |   PROJECT ACCUMULATED POINT CLOUDS ONTO DEPTH |
  +-----------------------------------------------+
                        |
                        v
  +-----------------------------------------------+ S14
  |   EXECUTE IMAGE SEGMENTATION ON INTENSITY IMAGE|
  +-----------------------------------------------+
                        |
                        v
  +-----------------------------------------------+ S15
  |   REMOVE OCCLUSION POINT CLOUD BASED ON       |
  |   EXECUTION RESULT OF IMAGE SEGMENTATION      |
  +-----------------------------------------------+
                        |
                        v
                    ( END )
```

Fig. 3

Fig. 4

Fig. 5

EP 4 682 826 A1

Depth ⟶ | 71 PROCESSING BLOCK DEPTH ACQUISITION UNIT | ⟶ ... ⟶ | 76 OCCLUSION POINT CLOUD REMOVAL UNIT | ⟶ Depth

OCC

Label ⟶ | 72 PROCESSING BLOCK LABEL ACQUISITION UNIT | ⟶ | 73 LABEL-BASED DEPTH ACQUISITION UNIT | ⟶ | 74 DYNAMIC RANGE CALCULATION UNIT | ⟶ DR ⟶ | OCCLUSION DETERMINATION UNIT | ~75

55

Fig. 6

Fig. 7

Fig. 8

```
                    ┌─────────────┐
                    │    START    │
                    └──────┬──────┘
                           │
                           ▼
    ┌────────────────────────────────────────────────────┐
    │ PROJECT RADAR DETECTION POINTS ONTO Intensity/Ambient│ S111
    └──────────────────────┬─────────────────────────────┘
                           │
                           ▼
    ┌────────────────────────────────────────────────────┐
    │  EXECUTE INSTANCE SEGMENTATION ON Intensity/Ambient │ S112
    └──────────────────────┬─────────────────────────────┘
                           │
                           ▼
    ┌────────────────────────────────────────────────────┐
    │       DETECT MOVING OBJECT BY AGGREGATING RADAR     │ S113
    │          DETECTION POINT FOR EACH LABEL             │
    └──────────────────────┬─────────────────────────────┘
                           │
                           ▼
    ┌────────────────────────────────────────────────────┐
    │  REMOVE POINT CLOUD CORRESPONDING TO MOVING OBJECT  │ S114
    └──────────────────────┬─────────────────────────────┘
                           │
                           ▼
    ┌────────────────────────────────────────────────────┐
    │         BACK-PROJECT Depth ONTO POINT CLOUD         │ S115
    └──────────────────────┬─────────────────────────────┘
                           │
                           ▼
    ┌────────────────────────────────────────────────────┐
    │       ACCUMULATE POINT CLOUD FOR MULTIPLE FRAMES    │ S116
    └──────────────────────┬─────────────────────────────┘
                           │
                           ▼
    ┌────────────────────────────────────────────────────┐
    │     PROJECT ACCUMULATED POINT CLOUDS ONTO Depth     │ S117
    └──────────────────────┬─────────────────────────────┘
                           │
                           ▼
    ┌────────────────────────────────────────────────────┐
    │        REMOVE OCCLUSION POINT CLOUD BASED ON        │ S118
    │     EXECUTION RESULT OF INSTANCE SEGMENTATION       │
    └──────────────────────┬─────────────────────────────┘
                           │
                           ▼
                    ┌─────────────┐
                    │     END     │
                    └─────────────┘
```

Fig. 9

Fig. 10

```
                        ( START )
                            │
                            ▼
┌─────────────────────────────────────────────────┐
│     CONVERT RGB IMAGE INTO LUMINANCE IMAGE       │ S211
└─────────────────────────────────────────────────┘
                            │
                            ▼
┌─────────────────────────────────────────────────┐
│          CALCULATE STEREO DEPTH DATA USING       │ S212
│          LUMINANCE IMAGE AND Intensity/Ambient   │
└─────────────────────────────────────────────────┘
                            │
                            ▼
┌─────────────────────────────────────────────────┐
│    EXECUTE INSTANCE SEGMENTATION ON Intensity/Ambient │ S213
└─────────────────────────────────────────────────┘
                            │
                            ▼
┌─────────────────────────────────────────────────┐
│        BACK-PROJECT Depth ONTO POINT CLOUD       │ S214
└─────────────────────────────────────────────────┘
                            │
                            ▼
┌─────────────────────────────────────────────────┐
│     ACCUMULATE POINT CLOUDS FOR MULTIPLE FRAMES  │ S215
└─────────────────────────────────────────────────┘
                            │
                            ▼
┌─────────────────────────────────────────────────┐
│    PROJECT ACCUMULATED POINT CLOUDS ONTO Depth   │ S216
└─────────────────────────────────────────────────┘
                            │
                            ▼
┌─────────────────────────────────────────────────┐
│      REMOVE POINT CLOUD CORRESPONDING TO MOVING  │ S217
│      OBJECT USING STEREO DEPTH DATA AND Depth ONTO│
│      WHICH ACCUMULATED POINT CLOUDS ARE PROJECTED │
└─────────────────────────────────────────────────┘
                            │
                            ▼
┌─────────────────────────────────────────────────┐
│      REMOVE OCCLUSION POINT CLOUD BASED ON       │ S218
│      EXECUTION RESULT OF INSTANCE SEGMENTATION   │
└─────────────────────────────────────────────────┘
                            │
                            ▼
                        ( END )
```

Fig. 11

500 COMPUTER

501 CPU
502 ROM
503 RAM
504
505 INPUT/OUTPUT INTERFACE
506 INPUT UNIT
507 OUTPUT UNIT
508 STORAGE UNIT
509 COMMUNICATION UNIT
510 DRIVE
511 REMOVABLE MEDIUM

## INTERNATIONAL SEARCH REPORT

| International application No. |
|---|
| **PCT/JP2024/007489** |

| A. | CLASSIFICATION OF SUBJECT MATTER |
|---|---|

*G06T 7/521*(2017.01)i; *G01S 17/89*(2020.01)i; *G06T 7/11*(2017.01)i
FI:    G06T7/521; G06T7/11; G01S17/89

According to International Patent Classification (IPC) or to both national classification and IPC

| B. | FIELDS SEARCHED |
|---|---|

Minimum documentation searched (classification system followed by classification symbols)

G06T7/521; G01S17/89; G06T7/11

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | UHRIG, Jonas et al. Sparsity Invariant CNNs, 2017 International Conference on 3D Vision (3DV), 2017, pp. 11-20, URL: https://ieeexplore.ieee.org/document/8374553, DOI: 10.1109/3DV.2017.00012<br>entire text, all drawings | 1-17 |
| A | JP 2019-106034 A (KDDI CORPORATION) 27 June 2019 (2019-06-27)<br>entire text, all drawings | 1-17 |
| A | JP 2020-061114 A (INDUSTRIAL TECHNOLOGY RESEARCH INSTITUTE) 16 April 2020 (2020-04-16)<br>entire text, all drawings | 1-17 |
| A | WO 2019/187216 A1 (NEC SOLUTION INNOVATORS LTD.) 03 October 2019 (2019-10-03)<br>entire text, all drawings | 1-17 |

☐ Further documents are listed in the continuation of Box C.          ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 May 2024** | **21 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/007489**

| Patent document cited in search report | | | Publication date (day/month/year) | Patent family member(s) | | | Publication date (day/month/year) |
|---|---|---|---|---|---|---|---|
| JP | 2019-106034 | A | 27 June 2019 | (Family: none) | | | |
| JP | 2020-061114 | A | 16 April 2020 | US | 2020/0111225 | A1 | |
| | | | | entire text, all drawings | | | |
| | | | | CN | 111105449 | A | |
| WO | 2019/187216 | A1 | 03 October 2019 | US | 2021/0019501 | A1 | |
| | | | | entire text, all drawings | | | |
| | | | | EP | 3779880 | A1 | |
| | | | | CN | 111937037 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **UHRIG, JONAS et al.** Sparsity invariant CNNs.. IEEE, 2017
- **SZYMON. R ; MARC. L**. Efficient Variants of the ICP Algorithm. *Proceedings Third International Conference on 3-D Digital Imaging and Modeling*, 2001
- **GOJCIC, ZAN et al.** The perfect match: 3d point cloud matching with smoothed densities.. *Proceedings of the IEEE/CVF*, 2019
- **N. OTSU**. A Threshold Selection Method from Gray-Level Histograms. *IEEE Transactions on Systems, Man, and Cybernetics*, January 1979, vol. 9 (1), 62-66
- **HE, KAIMING et al.** Mask r-cnn.. *Proceedings of the IEEE international conference on computer vision.*, 2017
- Solo: Segmenting objects by locations.. **WANG, XINLONG et al.** Computer Vision-ECCV. Springer International Publishing, 23 September 2020

- **MAYER, NIKOLAUS et al.** A large dataset to train convolutional networks for disparity, optical flow, and scene flow estimation.. *Proceedings of the IEEE conference on computer vision and pattern recognition.*, 2016
- **TANKOVICH, VLADIMIR et al.** Hitnet: Hierarchical iterative tile refinement network for real-time stereo matching.. *Proceedings of the IEEE/CVF Conference on Computer Vision and Pattern Recognition.*, 2021
- **XU, GANGWEI et al.** Attention concatenation volume for accurate and efficient stereo matching.. *Proceedings of the IEEE/CVF Conference on Computer Vision and Pattern Recognition.*, 2022
- **A. SHUKLA ; A. UPADHYAY ; M. SHARMA ; V. CHINNUSAMY ; S. KUMAR**. High-Resolution NIR Prediction from RGB Images: Application to Plant Phenotyping. *IEEE International Conference on Image Processing (ICIP)*, 2022, 4058-4062